Europäisches Patentamt

European Patent Office

Office européen des brevets

(11) Publication number: **0 136 912**
**B1**

(12) **EUROPEAN PATENT SPECIFICATION**

(45) Date of publication of patent specification: **20.12.89**

(51) Int. Cl.⁴: **B 21 K 1/56, F 16 B 25/02**

(21) Application number: **84306722.4**

(22) Date of filing: **02.10.84**

(54) **Self-drilling screw.**

(30) Priority: **04.10.83 AU 1690/83**

(43) Date of publication of application:
**10.04.85 Bulletin 85/15**

(45) Publication of the grant of the patent:
**20.12.89 Bulletin 89/51**

(84) Designated Contracting States:
**AT BE CH DE FR GB IT LI NL SE**

(56) References cited:
**DE-A-2 431 306**
**DE-A-2 820 259**
**DE-B-2 103 053**
**GB-A-2 100 628**
**US-A-3 395 603**
**US-A-4 104 446**

(73) Proprietor: **W.A. Deutsher Pty. Ltd.**
**600 South Road**
**Moorabbin Victoria 3189 (US)**

(72) Inventor: **Roberts, David J.A.**
**32 Inglis Street**
**Mornington Victoria 3931 (AU)**
Inventor: **Brindle, Brian**
**31 Guinevere Parade**
**Glen Waverley Victoria 3150 (AU)**

(74) Representative: **Rackham, Stephen Neil et al**
**GILL JENNINGS & EVERY 53-64 Chancery Lane**
**London WC2A 1HN (GB)**

Courier Press, Leamington Spa, England.

EP 0 136 912 B1

## Description

This invention relates to self-drilling screws.

Self-drilling screws are well known and U.S. Patent 3,125,923 describes an example screw of that form. It is equally well known to form the drilling end of such screws by pinch-pointing, which involves a cold forging operation, and that type of method is described in US—A—3,395,603.

The drilling end configuration can be formed by a machining operation as referred to in US—A—3,125,923, but forging is generally preferred because it is a less expensive method of manufacturing the screws. Forged-end drilling screws however, do not usually match the machined screws in drilling efficiency. That results from any one or more of a variety of factors including inadequate or incomplete formation of the cutting edges at the drilling end tip, a negative rake behind those edges, inadequate control of the chisel point formation and inefficient removal of the butt or waste resulting from the drill tip forming operation.

It is an object of the present invention to provide a self-drilling screw having a forged point or drilling end and which has improved drilling efficiency.

GB—A—2,100,628 discloses a self-drilling screw including a head at one end, a forged drilling portion at the opposite end comprising a generally conical tip portion and a main portion longitudinally adjacent the tip portion, two longitudinally extending flutes formed in the drilling portion on respective opposite sides thereof, each flute comprising a base and two portions laterally adjacent the base arranged end to end and extending generally longitudinally with the portion adjacent the screw head nearer to parallel with the longitudinal axis than is the portion remote from the screw head, and land surfaces, a respective land surface extending between each side of each flute and the adjacent side of the other flute, each land surface having a leading edge and a trailing edge relative to the intended direction of rotation of the screw and each land surface being progressively located closer to the axis of the screw in a direction away from the leading edge.

According to the present invention such a screw is characterised in that the minimum width of the cross-section of the main portion is 60 to 80% of the maximum width thereof, and in that a fillet extends across the base of each respective flute and extends longitudinally from the chisel point of the screw towards the head end thereof for part only of the axial length of the flute and has a generally flat surface which is transversely inclined to the adjacent surface of the base.

The essential features of the invention, and further optional features, are described in detail in the following passages of the specification which refer to the accompanying drawings. The drawings however, are merely illustrative of how the invention might be put into effect so that the specific form and arrangement of the features (whether they be essential or optional features) shown is not to be understood as limiting on the invention.

In the drawings:

Figure 1 is a view of the drilling end portion of a prior art example;

Figure 2 is a view of the drilling end portion of another prior art example;

Figure 3 is a view similar to Figure 2 but showing the drilling end portion rotated through 90°;

Figure 4 is an enlarged cross sectional view taken along line XI—XI of Figure 3;

Figure 5 is a view of the drilling end portion of an embodiment of the invention;

Figure 6 is an end view of the drilling end portion shown in Figure 5;

Figure 7 is a cross sectional view taken along line XIV—XIV of Figure 5;

Figure 8 is a cross sectional view taken along line XV—XV of Figure 5;

Figure 9 is a view of part of a die suitable for forming the drilling end portion of Figures 5 to 8;

Figure 10 is an enlarged cross sectional view taken along line XVII—XVII of Figure 9.

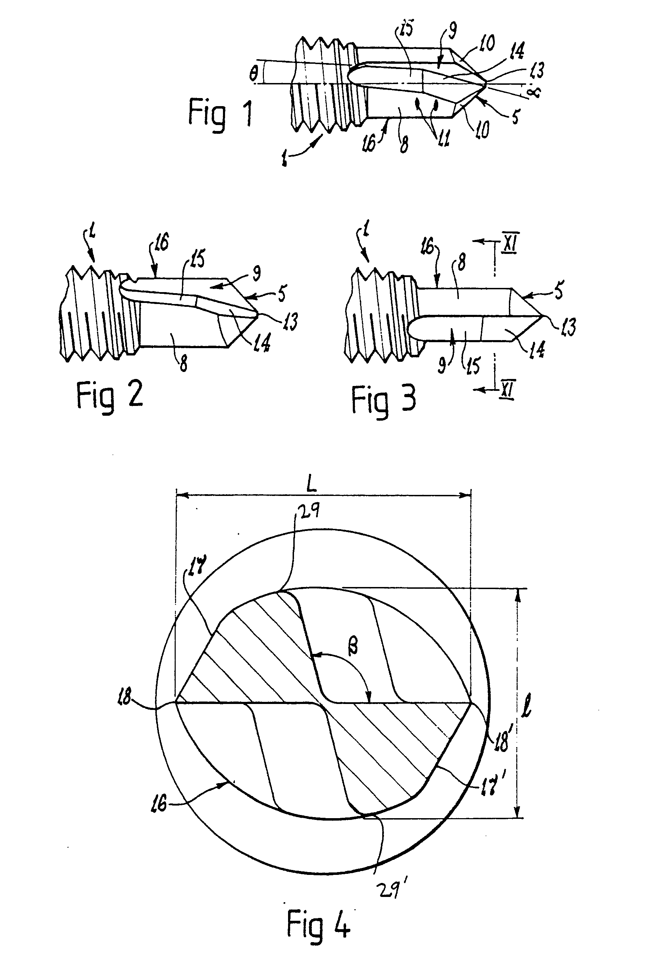

Figure 1 shows a self-drilling screw known in the prior art which includes in its drilling end portion 16 longitudinally extending flutes 9, 9'. A land surface 8, 8' extends between the flutes 9, 9' at a location adjacent a sloping tip end surface 10. Each flute is composed of two portions 14 and 15 which extend at different angles α and θ relative to the longitudinal axis of the screw 1. The portion 14 of the flute 9, 9' adjacent the tip end 5 of the screw 1 may slope at an angle α in the region of 18°, whereas the other or shallower portion 15 may slope at an angle θ closer to parallel with the shank axis and in one example that is roughly 5°. Such a double angle arrangement improves swarf removal during the drilling operation.

The drilling end portion 16 of the screw 1 has a pronounced elliptical shape as shown by Figures 2 to 4. In that regard, the cross sectional shape at that portion 16 is not necessarily a true ellipse, but is simply elliptical in form in that it has a minor axis and a major axis and the periphery may have flat sections 17, 17' directly behind each flute leading edge 18, 18' as shown in Figure 11.

In the particular example shown, the length "I" of the minor axis is roughly 75% of the length "L" of the major axis. Other arrangements can be adopted however, and satisfactory results can be achieved with "I" in the range of 60 to 80% inclusive of "L".

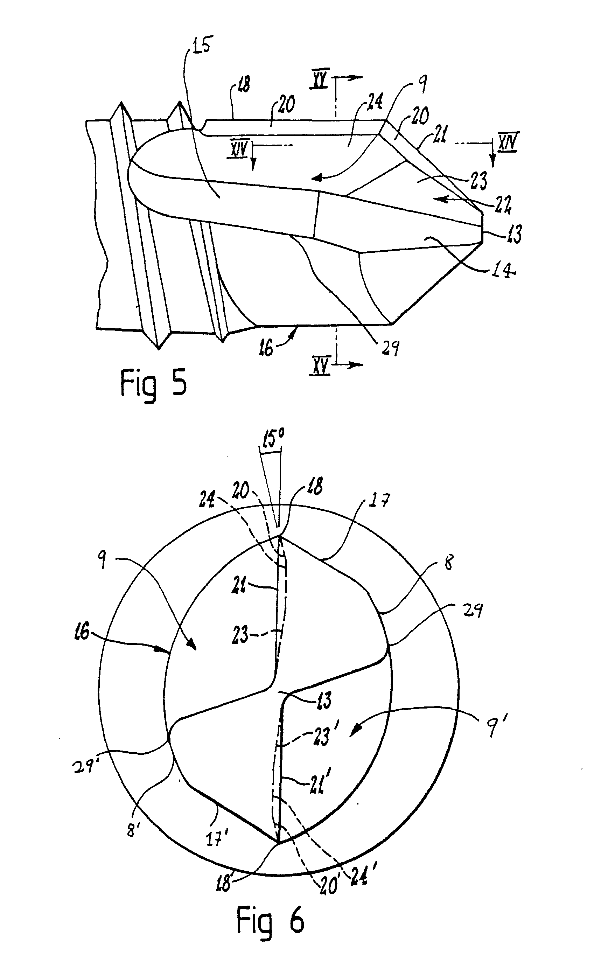

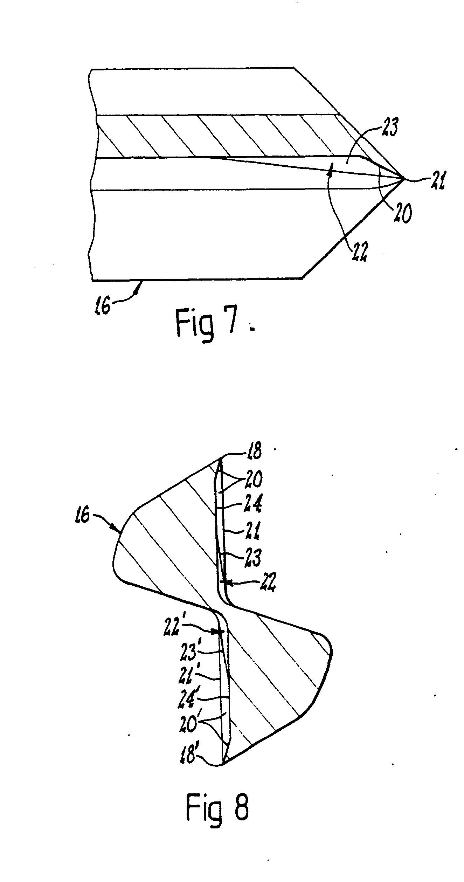

Figures 5 to 8 show an embodiment of the present invention applied to a screw having an elliptical end formation as described in connection with Figures 2 to 4.

The end portion 16 of the screw 1 shown in Figure 5 is as for the screw 1 shown in Figure 2 except for two additions. The first is a relatively narrow lip 20 formed along both the flute leading edge 18, 18' and the tip cutting edge 21, 21' and the second is a fillet 22, 22'. The lip 20, 20' is part of the prior art and would normally be included in a screw 1 as shown by Figure 2. It is usual to form such a lip 20, 20' by providing a 15 degree rake directly behind each of the edges 18, 18' and 21, 21' although other angles could be adopted to suit particular requirements.

It is found that self-drilling screws of the kind under discussion tend to fail at the chisel point 13, particularly at the commen cement of the drilling operation. The applied torque may need to be limited in order to meet that problem, but that may not be possible on all occasions and in any event tends to increase the time necessary to perform the drilling operation. A fillet 22, 22' located at the base of each flute 9, 9' at the tip end portion, serves to strengthen the chisel point 13 and thereby enable use of relatively high starting torques for the drilling operation.

The fillet 22, 22' could take any of several different forms, but one particularly satisfactory form is shown in Figures 5 to 8. In that example arrangement each fillet 22, 22' extends longitudinally from the chisel point 13 part way along the base of the respective flute 9, 9'. As shown, each fillet preferably has a substantially flat surface 23, 23' which starts at the junction of the adjacent cutting edge 21, 21' and the chisel point 13 and slopes transversely at an angle of say 5° (Figure 6). The surface 23, 23' is shown as located in a plane which is substantially parallel to the longitudinal axis of the screw 1, but other arrangements could be adopted. Because of the foregoing arrangement of the surface 23, 23', it tends to blend into the flute surface 24, 24' and thereby limits the extent of the fillet 22, 22' as best seen in Figure 12.

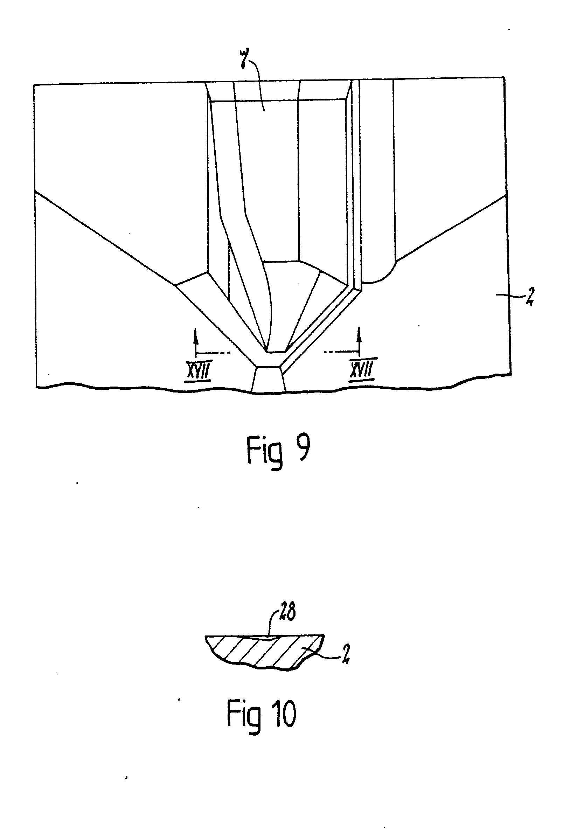

Figures 9 and 10 show part of a die which is arranged to produce the fillet 22, 22' as described. As shown, a recess 28 is formed in the die at an appropriate position for that purpose.

In the screw construction described, it is preferred that the flutes 9, 9' are relatively wide so as to promote clearance of swarf. That may be achieved as shown by having an included angle $\beta$ (Figure 4) of greater than 90° between the two sides of the flute 9, 9'. An included angle $\beta$ in the range of 105° to 115° inclusive has been found to be satisfactory, although 110° is generally preferred.

## Claims

1. A self-drilling screw including a head at one end, a forged drilling portion (16) at the opposite end comprising a generally conical tip portion and a main portion longitudinally adjacent the tip portion, two longitudinally extending flutes (9, 9') formed in the drilling portion (16) on respective opposite sides thereof, each flute (9, 9') comprising a base (24) and two portions (14, 15) laterally adjacent the base (24) arranged end to end and extending generally longitudinally with the portion (15) adjacent the screw head nearer to parallel with the longitudinal axis than is the portion (14) remote from the screw head, and land surfaces (8, 17, 8', 17'), a respective land surface (8, 17, 8', 17') extending between each side of each flute (9, 9') and the adjacent side of the other flute (9, 9'), each land surface having a leading edge (18, 18') and a trailing edge (29, 29') relative to the intended direction of rotation of the screw and each land surface (8, 17, 8', 17') being progressively located closer to the axis of the screw in a direction away from the leading edge (18, 18'), characterised in that the minimum width of the cross-section of the main portion is 60 to 80% of the maximum width thereof, and in that a fillet (22) extends across the base (24) of each respective flute (9, 9') and extends longitudinally from the chisel point (13) of the screw towards the head end thereof for part only of the axial length of the flute (9, 9') and has a generally flat surface (23) which is transversely inclined to the adjacent surface of the base (24).

2. A screw according to Claim 1, wherein each flat surface (23) is transversely inclined at an angle of substantially 5° and blends into the adjacent flute surface (24) at its end remote from the chisel point (13).

## Patentansprüche

1. Selbstbohrende Schraube mit einem Kopf an einem Ende, einem geschmiedeten Bohrabschnitt (16) an dem gegenüberliegenden Ende, mit einem allgemein konischen Spitzenabschnitt und einem Hauptabschnitt in Längsrichtung nahe dem Spitzenabschnitt, zwei sich in Längsrichtung erstreckenden Spannuten (9, 9'), die auf dem Bohrabschnitt (16) an jeweils gegenüberliegenden Seiten davon ausgebildet sind, wobei jede Spannut (9, 9') eine Basis (24) und zwei Abschnitte (14, 15) aufweist, die seitlich nahe der Basis (24) der Länge nach angeordnet sind und sich allgemein in Längsrichtung erstrecken, wobei der Abschnitt (15) nahe dem Schraubenkopf der Parallellage zu der Längsachse näher kommt als der Abschnitt (14) entfernt von dem Schraubenkopf, und mit einem Bund (8, 17, 8', 17'), wobei sich eine entsprechende Bundfläche (8, 17, 8', 17') zwischen jeder Seite jeder Spannut (9, 9') und der benachbarten Seite der anderen Spannut (9, 9') erstreckt, wobei jeder Bund eine vordere Kante (18, 18') und eine hintere Kante (29, 29') in bezug auf die beabsichtigte Drehrichtung der Schraube aufweist, und jede Bundfläche (8, 17, 8', 17') progressiv näher zur Schraubenachse in einer Richtung weg von der Führungskante (8, 18') angeordnet ist, dadurch gekennzeichnet, daß die minimale Breite des Querschnitts des Hauptabschnitts 60 bis 80% von dessen maximaler Breite beträgt und daß eine Auskehlung (22) sich über die Basis (24) jeder Spannut (9, 9') erstreckt, sich in Längsrichtung von der Bohrspitze (13) der Schraube zu ihrem Kopfende nur über einen Teil der axialen Länge der Spannut (9, 9') erstreckt und eine allgemein flache Fläche (23) aufweist, die in Querrichtung zu der benachbarten Fläche der Basis (24) geneigt ist.

2. Schraube nach Anspruch 1, dadurch gekennzeichnet, daß jede flache Fläche (23) in Querrichtung in einem Winkel von im wesentlichen 5° geneigt ist und an ihrem von der Bohrspitze (13) entfernten Ende in die benachbarte Nutfläche (24) übergeht.

## Revendications

1. Vis auto-perforante comprenant une tête à une première extrémité, un tronçon forgé (16) de perforation à l'extrémité opposée comprenant une partie de bout globalement conique et une partie principale adjacente longitudinalement à la partie de bout, deux cannelures (9, 9') s'étendant longitudinalement formées dans le tronçon perforant (16) sur des côtés opposés respectifs de celui-ci, chaque cannelure (9, 9') comprenant une base (24) et deux parties (14, 15) adjacentes latéralement à la base (24), disposées bout à bout et s'étendant globalement longitudinalement, la partie (15) adjacente à la tête de vis étant plus proche d'une parallèle à l'axe longitudinal que ne l'est la partie (14) éloignée de la tête de vis, et des surfaces intermédiaires (8, 17, 8', 17'), une surface intermédiaire respective (8, 17, 8', 17') s'étendant entre chaque côté de chaque cannelure (9, 9') et le côté adjacent de l'autre cannelure (9, 9'), chaque surface intermédiaire ayant un bord avant (18, 18') et un bord arrière (29, 29') par rapport au sens prévu de rotation de la vis et chaque surface intermédiaire (8, 17, 8', 17') se rapprochant progressivement de l'axe de la vis dans une direction s'éloignant du bord avant (18, 18'), caractérisée en ce que la largeur minimale de la section transversale de la partie principale est de 60 à 80% de sa largeur maximale, et en ce qu'un congé (22) s'étend en travers de la base (24) de chaque cannelure respective (9, 9') et s'étend longitudinalement à partir de la pointe de coupe (13) de la vis vers son extrémité de tête sur une partie seulement de la longueur axiale de la cannelure (9, 9') et présente une surface globalement plane (23) qui est inclinée transversalement à la surface adjacente de la base (24).

2. Vis selon la revendication 1, dans laquelle chaque surface plane (23) est inclinée transversalement d'un angle de sensiblement 5° et se fond dans la surface de cannelure adjacente (24) à son extrémité éloignée de la pointe de coupe (13).

EP 0 136 912 B1

Fig 1

Fig 2

Fig 3

Fig 4

Fig 5

Fig 6

Fig 7 .

Fig 8

Fig 9

Fig 10

4